# EUROPEAN PATENT APPLICATION

(11) **EP 4 831 240 A1**
(43) Date of publication of application: **28.10.2026**
(21) Application number: 26173295.2
(22) Date of filing: 20.04.2026
(51) Int. Cl.: C08L 23/20

(54) **PFAS-FREE NON-CROSSLINKED BLEND COMPOSITION FOR USE IN HEAT SHRINK TUBING APPLICATIONS**

(30) Priority: 23.04.2025 US 202519186694
(71) Applicant: Creganna Unlimited Company, Ballybrit, Galway (IE); TE Connectivity Solutions GmbH, 8200 Schaffhausen (CH)
(72) Inventor: DEPRENGER-GOTTFRIED, Gavriel L, Plymouth, 55442 (US); MA, Le, Fremont, 94555 (US); CHIOTA, Jason Thomas, Fremont, 94555 (US)
(74) Representative: Ashton, Gareth Mark

(57) **Abstract**

A PFAS-free non-crosslinked composition comprises a blend of polymethylpentene, an impact modified polypropylene, and a cyclic-olefin copolymer. The PFAS-free non-crosslinked blend composition is semi-crystalline, preferably having less than 50 % crystallinity. The PFAS-free non-crosslinked blend composition can be formed into a heat shrink tube and can exhibit peelability.

## Description

### FIELD OF THE INVENTION

The present invention relates to a PFAS-free, non-crosslinked, semi-crystalline blend composition which can be used in heat shrink tubing applications.

### BACKGROUND OF THE INVENTION

Perfluoroalkyl and poly fluoroalkyl materials (PFAS) are a broad range of materials with various properties and characteristics. PFAS materials may have high resistance to oil, water, temperature, chemicals and fire and are found in many household materials. PFAS generally are per- and polyfluoroalkyl substances that contain the perfluoroalkyl moiety with two adjacent fully fluorinated carbons, R-(CF₂)-C(F)(R')R", or perfluoroalkyl ether moiety, R-(CF₂)-O-(CF)(R')R", where R, R', and R" represent any functional group or atom except hydrogen (H). This includes perfluoroalkyl substances with R-CF₂-CF₂-R' and CF₃-CF₂-R units or perfluoroalkyl ether substances with R-CF₂-O-CF₂-R', and CF₃-O-CF₂-R units. Due to their structure, these PFAS materials are also called the forever chemicals. The PFAS materials are extremely stable and highly resistant to breakdown. PFAS materials are considered not safe for the environment and can possibly cause deleterious effects in humans. In light of these concerns, compliance regulations, regulators and many industries are looking to move away from the use of PFAS materials.

PFAS materials are commonly used in heat shrink tubing. As such, heat shrink tubing can serve various functions. It can provide a tight, protective jacketing to closely cover and insulate various elements (e.g., to protect them from abrasion and to provide thermal, chemical, moisture, and/or electrical insulation); it can serve to bundle certain elements together (i.e., within the same heat shrink tube); it can serve to seal/isolate certain elements from others; it can be used to join/fuse two elements, e.g., two tubes together; and it can serve to modify the properties of an underlying material (e.g., by closing around another material and shrinking that material as well). These capabilities make heat shrink tubing useful for various purposes. Heat shrink tubing can be used in medical, chemical, electrical, optical, electronic, aerospace, automotive, and telecommunications fields.

In the electrical field, heat shrink tubing (HST) is a shrinkable plastic tube often used to insulate electrical wires and other electrical components. HST provides abrasion resistance and environmental sealing protection for stranded and solid wire conductors, connections, joints, and terminals used in various electrical applications. HST can also be used to repair damaged insulation on electrical wires, bundle wires together, and to create cable entry seals. In the medical field, heat shrink tubing is used in or for catheters, endoscopes and other medical devices.

HST may be a single-walled system or a multi-walled system, wherein the multi-walled system includes at least one heat-shrinkable layer and at least one other layer. Heat shrink tubing is commonly extruded in tube form and crosslinked with a crosslinking agent or by radiation. Examples of heat shrinkable materials can be found in U.S. Patent No. 2,027,962 and U.S. Patent No. 3,086,242.

The HST is then typically radially expanded (e.g., by mechanical means) to provide an expanded tubing material that can function as a heat shrink material (i.e., a material which, when heated, returns to its unexpanded form, and consequently "shrinks"). The expansion can be either in-line with extrusion, or offline (i.e., conducted independently of the extrusion process). All means for expansion of tubing are intended to be encompassed by the present invention. In certain embodiments, the tubing is expanded radially by pressurizing the tubing from the inside out, introducing stress into the tube wall. This pressurizing can be conducted by any means capable of providing a differential pressure between the inside and outside of the tubing. Such differential pressure can be created by imposing a pressure above atmospheric pressure in the center of the tube, imposing a pressure below atmospheric pressure on the outside of the tube, or a combination of the two.

The stress induced into the wall of the tube causes it to expand outward. The rate of expansion can be controlled so the tube will hold the expanded state and not recover until subjected to a further heat cycle. The extent to which a tube is expanded depends on the application for which the tubing is intended. For example, in some embodiments, the tubing is expanded to an internal diameter of from about 1.05 times its original (unexpanded) diameter to about 10 times its original (unexpanded) diameter.

The process of shrinking an HST is referred to as "recovering" an HST and the predetermined temperature at which an HST starts to recover is referred to as its "recovery temperature". As an HST recovers, i.e., shrinks, it exerts an inward force against the items it surrounds, which is referred to as the "hoop stress" of the HST. The degree of hoop stress is determined by certain HST characteristics such as the type of base polymer used to form the HST, the wall thickness of the HST, the degree of crosslinking, and the degree of expansion. Hoop stress is also affected by process parameters such as temperature of recovery and degree of recovery.

European Patent Application No. 0622411A2 describes a blend of a polymethylpentene with polypropylene. The blend is used to form a film. The blend comprises from about 90 to about 10 % by weight of polymethylpentene and from about 10 to about 90 % by weight of polypropylene. The polymethylpentene used in the blend has a molecular weight from about 200,000 to about 700,000 and a melt flow rate between from about 20 grams/10 minutes to about 200 gram/10 minutes using ASTM standard D1238. The polypropylene has a molecular weight between 150,000 to about 350,000 and a melt flow rate from about 1 gram/10 minutes to about 10 grams/10 minutes using ASTM standard D1238. This blend has improved tensile strength, elongation and release properties.

U.S. Patent Application Publication No. US 2015/0147499 A1 describes a heat shrinkable tube. The heat shrinkable tube is an extrusion and expansion of a blend comprising a polyethylene terephthalate copolymer. The polyethylene terephthalate copolymer comprises 85% by weight of the blend. The heat shrinkable tube made of this blend has a longitudinal shrinkage of less than 50%.

U.S. Patent No. 9,440,044 B2 describes a heat shrink tube which can be peeled in a longitudinal direction after use. The heat shrink tubing can be of various compositions, and generally is produced from at least one fluorinated, copolymeric resin. The tubing exhibits good optical clarity and or peelability.

U.S. Patent Application Publication No. US2020/01151123 A1 describes a multilayer packaging film having improved sealability with excellent shrinkability, good optics and strength without using internal layers and cross-linking. The film can be made of a polyolefin such as polymethylpentene.

U.S. Patent No. 11,441,023 B2 describes polyethylene films and methods of making the same. The polymer composition used to make the polyethylene film comprises from 75 weight % to 99 weight % of a metallocene linear low density polyethylene (LLDPE) based on the weight of the polymer composition, and from 1 weight % to 25 weight % of a cyclic-olefin copolymer based on the weight of the polymer composition, wherein: the metallocene LLDPE comprises from 80 weight % to 99 weight % ethylene derived units and 1 weight % to 20 weight % units derived from one or more C3 to C20 α-olefins; a hafnium concentration of greater than 5 ppm by weight; has a density in the range of from 0.905 g/cm3 to 0.930 g/cm3; has a melt index (I2) in the range of from 0.1 g/10 min to 2.0 g/10 min; has a melt index ratio (MIR) in the range of from 25 to 80; and has a molecular weight distribution (MWD) in the range of from 1.5 to 5.5; and the cyclic-olefin copolymer has a glass transition temperature (Tg) of greater than 100° C. as measured by DSC method, and wherein the cyclic-olefin copolymer comprises greater than 70 weight % of or more cyclic-olefin derived units by weight of the cyclic-olefin copolymer.

U.S. Patent Application Publication No. US 2023/0240840 A1 describes an implantable prosthetic device, such as a prosthetic heart valve. The device is provided with a plurality of protective covers over the frame or support members of the valve. The protective covers can be heat shrink wrap. The heat shrink wrap can be a polymethylpentene.

FICCOTUBE FT100 is an example of a commercially available heat shrink tubing from Gremco GmbH made of high-quality polyolefins. The polyolefins that can be used include the common synthetic materials polyethylene, polypropylene or polymethyl pentene.

However, there exists a need for a PFAS-free blend composition which can be used for heat shrink tubing without the need for any additional crosslinking.

### SUMMARY OF THE INVENTION

An embodiment is directed to a PFAS-free non-crosslinked blend composition comprising a polymethylpentene, a cyclic-olefin copolymer, and an impact modified polypropylene.

Another embodiment is directed to a heat shrink tube made from a PFAS-free non-crosslinked blend composition comprising a polymethylpentene, a cyclic-olefin copolymer, and an impact modified polypropylene.

Yet another embodiment is directed to a process to form a heat shrink tube from a PFAS-free non-crosslinked blend composition comprising a polymethylpentene, a cyclic-olefin copolymer, and an impact modified polypropylene.

Other features and advantages of the present invention will be apparent from the following more detailed description of the preferred embodiment, taken in conjunction with the accompanying drawings which illustrate, by way of example, the principles of the invention.

### DETAILED DESCRIPTION OF THE INVENTION

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

The PFAS-free non-crosslinked blend composition of the instant invention comprises a mixture of polymethylpentene, a cyclic-olefin copolymer, and an impact modified polypropylene. Preferably, the PFAS-free non-crosslinked blend composition is semi-crystalline with less than about 50% crystallinity. Moreover, the PFAS-free non-crosslinked blend composition preferably has an elongation of over 100% at the expansion temperature and can achieve a shrink ratio of at least 1.3. In addition, the PFAS-free non-crosslinked blend composition preferably has a low surface energy to reduce adhesion to other polymers above their melt temperature. In addition, it is desirable to have a PFAS-free non-crosslinked blend composition with a melt temperature exceeding 200 °C. Furthermore, it is desirable that the PFAS-free non-crosslinked blend composition can be processed at temperatures lower than conventional PFAS compositions. As the PFAS-free non-crosslinked blend composition does not release hydrofluoric acid as PFAS materials do, the result is a longer life for equipment that is used in handling the PFAS-free non-crosslinked blend composition.

The polymethylpentene used in the PFAS-free non-crosslinked blend can be any commercially available polymethylpentene. For example, TPX DX845, a 4-methylpentene-1-based olefin copolymer having a high modulus, or TPX MX0020, a low modulus grade polymethylpentene, both commercially available from Mitsui Chemicals America, Inc., can be used in the blend composition of the instant invention. The amount of polymethylpentene can range from about 60 to about 90 weight % of the entire blend.

The cyclic-olefin copolymers (COC) that can be used in the PFAS-free non-crosslinked blend composition are amorphous transparent polymers based upon cyclic and linear olefins. Preferably, the copolymers used in the PFAS-free non-crosslinked blend composition contain 40 weight % or less ethylene derived units, the remainder being cyclic-olefin derived units selected from C5 to C8, or C12, or C16, or C20 olefins comprising at least one C5 to C8 cyclic structure, such as, for example, bicyclo compounds such as bicyclo-(2,3,1)-heptene-2. Preferably, the cyclic-olefin derived unit is selected from C5, or C6 to C8, or C10, or C12, or C20 cyclic-olefin derived units, and more preferably bicyclic-olefin derived units which are cyclic-olefins containing a bridging hydrocarbon moiety that forms two rings in the overall structure such as in bicyclo-(2,3,1)-heptene-2 (norbornenes). Most preferably, the cyclic-olefin derived units are selected from norbornenes, tetracyclododecene, or a combination thereof. In any embodiment, the cyclic-olefin content (cyclic-olefin derived units) of the COCs useful herein is 60, or 65, or 70 weight % or more, or within a range from 60, or 65, or 70 weight % to 80, or 85, or 90 weight %, by weight of the COC.

The cyclic-olefin copolymers can be made by any suitable polymerization means. In any embodiment, the cyclic-olefin monomer that is combined with ethylene monomers in the polymerization process is selected from C5 to C8, or C12, or C16, or C20 olefins comprising at least one C8 to C8 cyclic structure, such as, for example, bicyclo compounds such as bicyclo-(2,3,1)-heptene-2. Preferably, the cyclic-olefin is selected from C5, or C6 to C8, or C10, or C12, or C20 cyclic-olefins, and more preferably bicyclic-olefins which are cyclic-olefins containing a bridging hydrocarbon moiety that forms two rings in the overall structure such as in bicyclo-(2,3,1)-heptene-2 (norbornenes). Most preferably, the cyclic-olefins used to make the COC are selected from norbornenes, tetracyclododecene, and substituted versions thereof. In order to effect the polymerization process upon combining, as well as combining at a desirable temperature, the components are preferably combined at a pressure of at least 0.8, or 1, or 2, or 3 MPa; or within a range from 0.8, or 1, or 2, or 3 MPa to 4, or 6, or 8, or 10 MPa. This pressure can come from the addition of the ethylene and/or other gases in the polymerization reactor, and is of course influenced by the temperature of the reactor. The level of ethylene and cyclic-olefin is adjusted to obtain the desired catalytic activity as well as desired level of cyclic-olefin comonomer incorporation into the polyethylene described herein. Preferably, the cyclic-olefin copolymers cannot have too high of a norbornene content relative to its ethylene content. In any embodiment, the combining of the monomers with catalyst can take place at a reaction temperature, the average temperature within the vessel or reactor used to combine the components to effect polymerization, within a range from 80, or 85, or 90, or 100° C. to 120, or 130, or 140, or 150° C. In any embodiment, the cyclic-olefin copolymer has a glass transition temperature (Tg) of 70° C., 80° C., 90° C., 100° C., 110° C., 120° C., 130° C., 140° C., 150° C., 160° C., 170° C., 180° C., 190° C., or 200° C., or within a range from 70° C. to 110° C., 140° C., 160° C., 170° C., 190° C., or 200° C., as measured by the differential scanning calorimeter (DSC) method. In any embodiment, the cyclic-olefin copolymer has an melt flow index (2.16 kg/190° C.) within a range from 0.01, or 0.05, or 0.1 g/10 min to 1, or 1.5, or 2 g/10 min.

The cyclic-olefin copolymer should increase the glass transition temperature of the blend composition, as well as control the crystallinity of the blend composition, preferably keeping the crystallinity within the amorphous to semi-crystalline range. Moreover, it is desirable that the cyclic-olefin copolymer has a viscosity similar to those of the other components that form the PFAS-free non-crosslinked blend composition, as this can improve miscibility between the components. Preferably, the cyclic-olefin copolymer has a glass transition temperature of below about 145° C. An example of a commercially available cyclic-olefin copolymer that can be used in the instant invention is Topas 6013M available from Topas Advanced Polymers GmbH. The amount of the cyclic-olefin copolymer in the blend composition is in the range of about 5 to about 10 weight % of the total composition and more preferably, from about 5 to about 8 weight%.

The impact modified polypropylene includes a polypropylene block copolymer. The impact modified polypropylene is produced through the polymerization of propylene and ethylene by using Ziegler Natta catalysts. Their synthesis consists of a heterophasic amorphous structure inside a semi-crystalline polypropylene homopolymer matrix. An example of a commercially available impact modified polypropylene includes N020G-00 Polypropylene Impact Copolymer, available from Ineos Olefins & Polymers USA. The amount of impact modified polypropylene added to the blend composition may affect the elongation of the blend composition and its ability to be heat shrunk. The amount of impact modified polypropylene in the blend composition ranges from about 5 to about 30 weight % of the total composition, preferably from about 20 to about 30 weight % of the total composition.

Other conventional additives may be added to the PFAS-free non-crosslinked blend composition. Examples of conventional additives include pigments, dyes, voiding agents, anti-static agents, foaming agents, plasticizers, radical scavengers, anti-blocking agents, anti-dust agents, anti-fouling agents, surface active agents, slip aids, optical brighteners, viscosity modifiers, gloss improvers, dispersion stabilizers, UV stabilizers, UV absorbers, antioxidants such as phenol antioxidants or amine antioxidants, lubricity agents, heat stabilizers, hydrolysis stabilizers, cross-linking activators, coupling agents, radio opacifiers (such as for example, but not limited to, barium sulfate), tungsten metal, non-oxide bismuth salts, colorants, reinforcing agents, impact strength modifiers, compatibilizing agents, flame retardants, and any combination thereof. Such additives may be included in conventional amounts.

The polymethylpentene, cyclic-olefin copolymers and impact modified polypropylene are mixed together, along with any conventional additives. The mixing equipment can be any suitable equipment used in the art of mixing concentrated solids. Examples of such suitable equipment include a batch mixer, such as a Brabender mixer or a Banbury mixer, or a single extruder, a twin screw extruder, high speed centrifugal mixers, a BUSS kneader, and the like. Most preferably, a twin screw extruder is used to mix the components of the PFAS-free non-crosslinked blend of the instant invention. The blend can then be extruded into a tube.

The heat shrinkability properties of a material are primarily caused by the relaxation of stored elastic stress that occurs between the glass transition temperature and the melt temperature of a composition. This allows the polymer chains in the blend to move more freely and return to a less stretched state. It is believed that in the case of the PFAS-free non-crosslinked blend composition of the instant invention, the blend can be heat shrinkable without the addition of any crosslinking agents and/or radiation. This is due to polymethylpentene's high melting point, which allows the crystallites to remain intact during the expansion temperature. These crystallites can act as crosslinks to support the elastic energy during tube expansion and contribute to the memory effect during recovery. Meanwhile, the impact-modified polypropylene ensures the system has sufficient elongation for stretching.

To determine the effectiveness of the blend composition of the instant invention for use in heat shrink applications, Dynamic Mechanical Analysis (DMA ) can be used. DMA offers a cost-effective and time-efficient way to simulate the expansion behavior of a tube during fabrication.

A HST made from the PFAS-free non-crosslinked blend composition is heated. When the heating temperature is above the shrink activation temperature in the blend, the tube will undergo a significant amount of shrinkage. The amount of shrinkage can be evaluated using a Dynamic Mechanical Analyzer using the following tests: ASTM 1204-14 (2020) and ASTM 2732-14 (2020).

These tests on the Dynamic Mechanical Analyzer provide important data to confirm that the blend composition can function as a heat shrink tube. The PFAS-free non-crosslinked blend composition has results in the range of 1.3 to 2.5 shrink ratio, which indicate that the blend can be heat shrinkable.

Within the extruder, the PFAS-free non-crosslinked blend composition of the instant invention are heated, compressed, and forced through an annular die set, creating a tube. Tubes of various diameters and lengths can be produced. The tube dimensions can be set by the tooling size on the extrusion line and this and other parameters of the extrusion step can be adjusted and optimized to produce the desired tubing. In some embodiments, tubing having a relatively uniform wall thickness is provided. In some embodiments, tubing can be extruded with one or more embedded stripes in the wall such that regions of weakness are defined which can enhance the peelability of certain compositions disclosed herein.

The extruded tubular form is then typically expanded (e.g., by mechanical means) to provide an expanded tubing material that can function as a heat shrink material (i.e., a material which, when heated, returns to its unexpanded form, and consequently "shrinks"). The expansion can be either in-line with extrusion, or offline (i.e., conducted independently of the extrusion process).

In certain embodiments, the heat shrink tubing described herein is described as "peelable," and can be readily peeled or torn apart in the longitudinal direction (e.g., to remove the heat shrink tubing from an underlying material). This peelability can advantageously allow for the tubing to be provided, used, and removed, in some embodiments, in the absence of any scoring, break lines, indentations, or perforations along the length of the tubing. In certain embodiments, a small score at the end of a length of tubing can allow one to peel the tubing for a significant length, including the full length of the tubing, providing two substantially equal halves of tubing following complete peeling of the length of tubing. The disclosed tubing can, in some embodiments, exhibit one or more of complete, straight, and even peeling along a given length of the tubing.

In certain embodiments, the heat shrink tubing provided according to the present disclosure is peelable lengthwise/longitudinally without use of any score lines, perforations, indentations, or the like. In certain such embodiments, a small nick, cut, or tear may be made at one end of the tubing to facilitate peeling of the tubing longitudinally (e.g., by hand). In other embodiments, no such nick, cut, or tear is required, and the tubing can be readily peeled (e.g., by hand) by pulling apart two sides of the tubing, beginning at one end of tubing. In certain embodiments, the tubing described herein may exhibit one or more of complete, straight, and even peeling along a given length of the tubing.

For example, in some embodiments, the tubing provided herein can exhibit one or more of complete, straight, and even peeling along at least about 1 meter of tubing, at least about 10 meters of tubing, or at least about 100 meters of tubing. In some embodiments, the tubing is cut into individual lengths, such as into individual tubes (e.g., with lengths tailored to particular applications). Of course, it is understood that sizes (both diameters and lengths) can be tailored for different applications and may be substantially larger or smaller. In certain embodiments, such tubes can be peeled completely and substantially evenly along their full lengths, where the tubing is peeled, to give two substantially equal longitudinal "halves" of tubing.

In one particular embodiment, the heat shrink tubing provided according to the present disclosure can be scored, cut, or nicked across the cross-section of the tubing diameter at one end. In some embodiments, the "peelability" or "tearability" can be achieved without any significant scoring or nicking. For example, in some embodiments, the score or nick across the cross-section of the tubing diameter has a length S that is less than about 1/10th the length L of the tubing to be peeled, less than about 1/25th the length L of the tubing to be peeled, less than about 1/50th the length L of the tubing to be peeled, or less than about 1/75th the length L of the tubing to be peeled. In some embodiments, such values can allow for complete peeling of the entire length of tubing and the peeled halves of tubing can be substantially equal in size (i.e., the tubing exhibits complete, straight, and/or even peeling along the entire length of the tubing.

The peel strength of the tubing materials described herein can vary. It is noted that preferred peel strengths vary with tubing diameter, with generally higher peel strengths preferred for larger diameters.

### Examples

One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.
In Example 1, 70 weight % of TPX 1 is blended with 25 weight % of impact modified polypropylene and 5 weight % of a cyclic-olefin copolymer. In Example 2, 80 weight % of TPX is blended with 15 weight % of impact modified polypropylene and 5 weight % of cyclic-olefin copolymer. In Example 3, 75 weight % of TPX2 is blended with 20 weight % of impact modified polypropylene and 5 weight % of cyclic-olefin copolymer. These 3 examples were processed after being fed in a single feeder in a twin screw extruder with zones ranging from 200 to 300° C. Once processed in the twin screw extruder, tubes made from the blended composition were tested using DMA to confirm that the blends can be used in heat shrink applications.

To measure the DMA of these blended composition, the extruded tube was cut open to create a film. The film was heated to approximately 170° C, then subjected to a constant force so that the film was stretched. When in the stretched state, the DMA results of Examples 1-3 in the range of 1.35 to 1.76 confirm that the blended composition can be used for heat shrink tubing applications.

## Claims

1. A PFAS-free non-crosslinked blend composition comprising a blend of a polymethylpentene, an impact modified polypropylene, and a cyclic-olefin copolymer.

2. The composition of claim 1, wherein said polymethylpentene comprises about 60 to about 90 weight % of the PFAS-free non-crosslinked blend composition.

3. The composition of claim 1 or 2, wherein said impact modified polypropylene comprises about 5 to about 30 weight % of the PFAS-free non-crosslinked blend composition.

4. The composition of claim 1, 2 or 3, wherein said impact modified polypropylene comprises from about 20 to about 30 weight % of the PFAS-free non-crosslinked blend composition.

5. The composition of any preceding claim, wherein said cyclic-olefin copolymer comprises about 5 to about 10 weight % of the PFAS-free non-crosslinked blend composition.

6. The composition of any preceding claim, wherein said cyclic-olefin copolymer comprises from about 5 to about 8 weight % of the PFAS-free non-crosslinked blend composition.

7. The composition of any preceding claim, wherein said PFAS-free non-crosslinked blend composition is semi-crystalline.

8. The composition of any preceding claim, wherein the PFAS-free non-crosslinked blend composition has less than 50% crystallinity.

9. The composition of any preceding claim, wherein said PFAS-free non-crosslinked blend composition has a melt temperature exceeding 200 °C.

10. The composition of any preceding claim, wherein said cyclic-olefin copolymers comprises 40 weight % or less ethylene derived units.

11. The composition of any preceding claim, wherein said cyclic-olefin copolymers comprise amorphous transparent polymers based upon cyclic and linear olefins.

12. The composition of any preceding claim, wherein said cyclic-olefin copolymers comprise cyclic-olefin derived units selected from C5 to C8, or C12, or C16, or C20 olefins comprising at least one C5 to C8 cyclic structure.

13. The composition of any preceding claim, wherein said cyclic-olefin copolymers comprise cyclic-olefin derived units selected from norbornenes, tetracyclododecene or a combination thereof.

14. The composition of any preceding claim, wherein the cyclic-olefin copolymer has a glass transition temperature of below about 145° C.

15. A heat shrink tube made from a PFAS-free non-crosslinked blend composition as defined in any preceding claim, wherein said tube exhibits heat shrink capability and preferably peelability.
